# EUROPEAN PATENT APPLICATION

(11) **EP 2 213 557 A1**
(43) Date of publication of application: **04.08.2010**
(21) Application number: 10000327.6
(22) Date of filing: 14.01.2010
(51) Int. Cl.: B62J 9/00

(54) **Mounting device of bags to the rear sides of motorcycles**

(30) Priority: 15.01.2009 IT PD20090008
(71) Applicant: MCJ di Marini Josè, 35010 Vigodarzere (PD) (IT)
(72) Inventor: Marini, Josè, 35010 Vigodarzere PD (IT)

(57) **Abstract**

This is a device for the rapid assembly and removal of bags on the rear sides of motorcycles.
The device is composed of a frame to be fixed solidly to the side of the motorcycle and a bag (11) that has been specially designed to quickly and securely fasten to said frame in a removable way.

## Description

It is well known that, depending on requirements, motorcycles are equipped with two bags fixed to the rear of the sides.

Currently a frame is fixed to the sides of motorcycles and the wall of the bag that rests against the frame is fitted with fastenings for fixing it to the frame.

The fixing of the bag in the above-mentioned case is carried out with special screws that require keys for tightening.

In practice, the bags become almost a solidly joined part of the motorcycle. Their removal necessitated a whole series of disengagements that are not easy to carry out.

The drawbacks of this show up particularly when the motorcycle needs to be washed.

This is aggravated by the fact that some models pf bags can be made with materials that are not completely waterproof, like leather for example.

Another drawback comes from the fact that the objects contained in the bags, which might be important, need to be taken out when the bike is parked and moved to another bag the motorcyclist might have.

The purpose of this patent is to equip one or both sides of the motorcycle with a special device or system that makes it possible to overcome these drawbacks and others that will be explained more clearly in this description.

The invention consists of a special frame that is fixed solidly to said side of the motorcycle and of fitting out the wall of the bag that rests against the side of the motorcycle with special fasteners that provide a simple and secure fastening of the bag to the frame and that provide an equally easy release of the bag from the frame.

This allows the motorcyclist, when he leaves his bike, to take with him the bag and equally when he has to wash the bike to remove the bags.

One advantage of this system is that the device that rigs out the bag and that attaches to the above-mentioned frame is practically part of the support wall because it is embedded within the bulk of the bag.

A further advantage is that the fixing and release, even if easy and quick, can be carried out by the owner of the motorbike alone when he has the right tool.

Another benefit is that it does not have any lock or locking component in sight that could be easily forced by a thief who wants to take the bag and contents when the motorbike is left unattended.

With particular reference to the example, the rapid mounting of the bag and also its release is obtained by equipping the wall of the bag, which rests against the frame and fixed solidly to the side of the motorcycle, with three fastenings, one of which is in line with the lower crosspiece of the frame for connecting using the male and female principle, and the other two suitably spaced from each other in line with the upper crosspiece of the frame composed of curved appendages carried by a shaft mounted inside the bag.

By rotating the shaft in one direction the two curved appendages, coming out from two small apertures in the wall of the bag clasp the horizontal crosspiece of the frame, thereby completing the fastening of the bag in three points.

By rotating the shaft in the opposite direction the two curved appendages disengage from the upper crosspiece of the frame and go back in through the apertures in the surface of the wall of the bag.

When the curved appendages that clasp the upper crosspiece of the frame are disengaged they can effectively mask, more or less totally, the opening of the slits, obtaining a continual surface of the wall.

As previously explained, in line with the crosspiece opposite the one where the slits are located from where the curved appendages come out, there are one or more counterparts that join with the respective clasps on said frame.

The composition of the three or more fastenings between the frame and the bag allows you to obtain a stable and secure union between the bag and the motorcycle especially when moving.

One advantage is that the above-mentioned frame, maintaining exclusively the coupling points with the bag, can be made in various ways in order to adapt to the various motorcycle models with just minimal modification, generally on the upper ends.

A further benefit of this fastening system is the fact that once the bags have been removed, the frame that is fixed to the motorcycle, because of its small size, is in no way dangerous for people or things, since there are no large protruding parts.

The possibility of adapting it for installation on practically any motorcycle makes it a basically universal fastening device, because the profile of the bags can follow and adapt to the protrusions on motorcycles.

What has been described is clarified by examining the attached drawings.

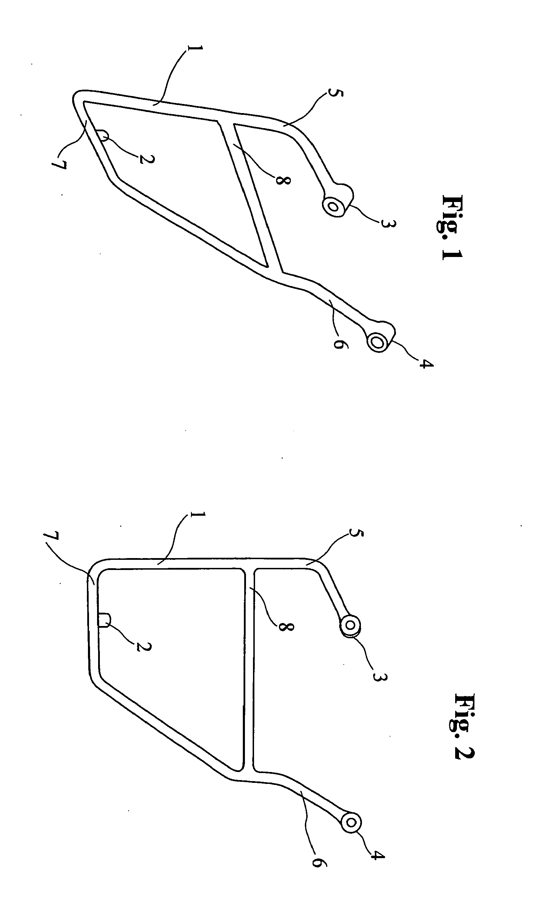

Fig. 1 and fig. 2 show the uninstalled frame 1 with the two bushes 3, 4 on the upper ends of the uprights 5, 6 for fixing to the structure of the motorcycle (not shown). We can see the male fastening 2, held by the lower cross-piece 7, for coupling with the female fastening 9 fixed to the wall 10 of the bag 11. We can see the upper cross-piece 8 for coupling with the curved appendages 15, 16 coming out of the openings 12, 13 on the wall 10.

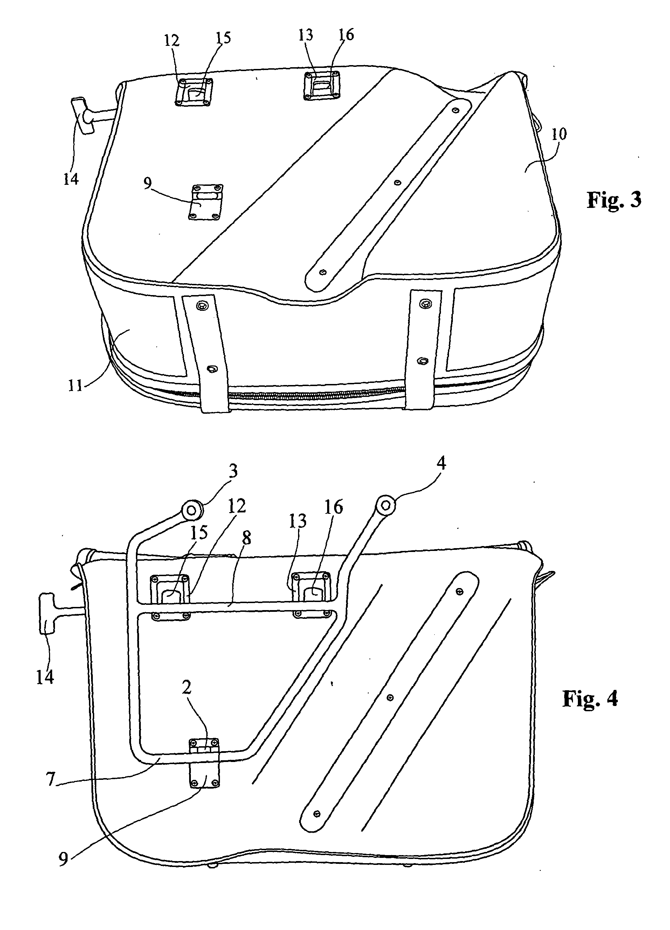

Fig. 3 shows the bag 11 from the part of the wall 10 that is put against the frame 1. We can see the female fastening 9 in the lower part and the two openings 12, 13 for the two curved appendages 15, 16 to come out.

We can see the key for rotating the shaft (not visible) inside the bag 11 for moving the two curved appendages 15, 16.

Fig. 4 shows the uninstalled bag 11 in line with the wall 10 that is put against the side of the motorcycle and the frame 1 resting against said wall 10.

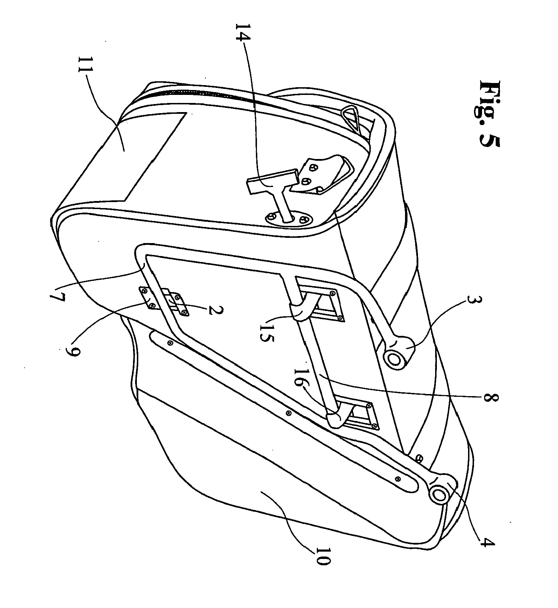

Fig. 5 is an axonometric view from above the side of the bag 11 joined to the frame 1.

To effectuate the patent, the frame 1 that is fitted at the top of the uprights 5, 6 with two robust bushes 3, 4 through which pass the screws (not shown) for fastening said frame 1 to the structure of the motorcycle.

Said frame 1, on the lower cross-piece 7, holds a coupling element 2 with which to couple with the housing 9 fixed in the lower part of the wall 10 of the bag 11, which is put against the side of the motorcycle.

The bag 11 has, on the upper part of the wall 10 that rests against the side, two apertures 12, 13 from which, by rotating the shaft (not shown) installed inside the bag 11 using a tool 14, two curved appendages come out that clasp the upper cross-piece 8 of the frame 1.

By rotating the shaft in the opposite direction the appendages 15, 16 disengage from the cross-piece 8, and go back inside the apertures 12, 13.

In these considerations the bag 11 can be raised by disengaging it from the lower male-female coupling and the motorcyclist can take the bag away with him.

It is clear that in the example shown the arrangement of the frame 1, its fastening points 8, 2, the arrangement of the couplings 15, 16 and the shape of the bag have been made for a specific motorcycle, nevertheless they can be easily adapted with minimal modifications allowing the above-mentioned device or system to be used on any type of motorcycle.

Indeed, in the event a soft type of bag 11 is used, made of leather or hide or something similar, the simple insertion of a preformed profile in it allows the wall 10 of the bag 11 to have those protrusions or recesses that are needed for adapting to the dimensions of the motorcycle.

## Claims

1. Quick assembly of bags onto the rear sides of motorcycles, **characterised by** the fact of being composed of a small frame (1), fixed solidly to the structure of the motorcycle, which has one or more coupling elements (8, 2) and by the fact that it is composed of a bag (11) whose wall (10), which rests on the above-mentioned frame, is fitted with special attachments (15, 16, 9) in line with said couplings for joining with said coupling elements (8, 2), in that said attachments (15, 16, 9) make up, all or just some, an initial employment with said coupling elements exposed beyond the surface of the wall (10) of the bag (11) and a second independent configuration where the couplings (15, 16) are within the surface of the wall 10) of the bag (11), without protruding beyond the area of the bag (11).

2. Rapid assembly of bags on the rear sides of motorcycles according to claim 1 **characterised by** the fact that a coupling point (2) on the lower part of the frame (1) is composed of a projecting element facing upwards that engages the coupling (9) of the bag (11) in the shape of a loop.

3. Rapid assembly of bags on the rear sides of motorcycles according to claim 1 **characterised by** the fact that a coupling point (8) on the top part of the frame (1) is composed of a cross-piece, preferably horizontal, that engages the coupling (15, 16) configured in the shape of a curve, following a controlled partial rotation.

4. Rapid assembly of bags on the rear sides of motorcycles according to the previous claim **characterised by** the fact that said coupling (15, 16) in the shape of a curved appendage comes out from an aperture (12, 13) on the side (10) of the bag (11).

5. Rapid assembly of bags on the rear sides of motorcycles according to claim 3, **characterised by** the fact that said coupling (15, 16) in the shape of a curved appendage goes inside said aperture (12, 13) on the side (10) of the bag (11), which rests on the frame (1), at least partially, obstructing the opening of the aperture (12, 13).

6. Rapid assembly of bags on the rear sides of motorcycles according to one or more of the previous claims, **characterised by** the fact that one or more of the couplings (15, 16) in the form of curved appendages are carried by a spindle, which is susceptible to angular movements, located inside the bag (11) near the respective aperture (12, 13), from which the appendage comes out, on the wall (10) of the bag (11) that rests on the frame (1).

7. Rapid assembly of bags on the rear sides of motorcycles according to the previous claim **characterised by** the fact that said spindle that carries one or more of the couplings (15, 16), in the form of curved appendages, located inside the bag (11), can be reached from the outside using a special tool (14) that allows it to rotate in two directions for connecting or disconnecting the curved-shaped couplings (15, 16) to the upper cross-piece (8) of the frame.

8. Rapid assembly of bags on the rear sides of motorcycles according to one or more of the previous claims, **characterised by** the fact that the coupling points (8, 2) and the respective couplings (15, 16, 9) can be one or several, at the top and at the bottom.

9. Rapid assembly of bags on the rear sides of motorcycles according to one or more of the previous claims, **characterised by** the fact that the coupling points (8, 2) and the respective couplings (15, 16, 9) can be arranged instead of at the top and bottom also on the two sides of the bag (11).
